# EUROPEAN PATENT APPLICATION

(11) **EP 4 477 433 A1**
(43) Date of publication of application: **18.12.2024**
(21) Application number: 23752807.0
(22) Date of filing: 06.02.2023
(51) Int. Cl.: B60H 1/22

(54) **HEATING CONTROL DEVICE AND CONTROL PROGRAM, FLUID HEATING UNIT, HEATING CYCLE DEVICE, AND VEHICLE AIR CONDITIONING DEVICE COMPRISING SAME**

(30) Priority: 09.02.2022 JP 2022018871
(71) Applicant: Valeo Japan Co., Ltd., Kumagaya-Shi SAITAMA 360-0193 (JP)
(72) Inventor: LEI, Mo, Kumagaya-shi Saitama 360-0193 (JP); KITAJIMA, Tatsuya, Kumagaya-shi Saitama 360-0193 (JP)
(74) Representative: Valeo Systèmes Thermiques
(86) International application number: PCT/JP2023/003708
(87) International publication number: WO 2023/153342

(57) **Abstract**

[Problem] The objective of the present disclosure lies in providing a heating control device and a control program, a fluid heating unit, a heating cycle device, and a vehicle air conditioning device comprising same, which integrate a function for detecting a dry-heating state of a heating element and a function for detecting a low flow rate state of a heating medium, and can thereby suppress an increase in the number of components.

[Solution] A heating control device 6 according to the present disclosure is mounted in a fluid heating unit 10 comprising a tank 15, heater 4, a temperature detection device 51 having a temperature-sensitive portion in a downstream portion of a flow path, and a transistor 5, and the heating control device stores a value of a threshold rate Vt set on the basis of a temperature increase rate V₀ of a coolant in the downstream portion of the flow path when a volume of the coolant is a defined amount and a flow rate of the coolant is 0 L/min, calculates a temperature increase rate V on the basis of a temperature detected by the temperature detection device, and turns the transistor off to stop application of electrical power to the heater when a value of the temperature increase rate is equal to or greater than the value of the threshold rate.

## Description

### Technical Field

The present disclosure relates to a heating control device and a control program, a fluid heating unit, a heating cycle device, and a vehicle air conditioning device comprising same.

### Background Art

A vehicle air conditioning device which employs a hot water-type heating device utilizing hot water to perform heating is conventionally known (e.g., see Patent Document 1). The vehicle air conditioning device of Patent Document 1 comprises a first switch and a second switch, and a target temperature of hot water following activation by means of the second switch is set at a lower value than a target temperature of the hot water following activation by means of the first switch, whereby it is possible to achieve a comfortable heating temperature during heating when a temperature inside a vehicle compartment is high.

Furthermore, a fluid heating unit for heating a fluid by means of an electrical-heating heater is disclosed as a heater for a hot water-type heating device (e.g., see Patent Document 2).

A device which stops a flow of current to heaters when electrical resistance between outer surfaces of different heaters reaches or exceeds an upper limit threshold is known as a heating device for preventing dry-heating of the heaters (e.g., see Patent Document 3) .

### Prior Art Documents

### Patent Document

Patent Document 1: JP H10-258630 A
Patent Document 2: JP 2017-215084 A
Patent Document 3: JP 2015-25594 A

### Summary of the Invention

### Problems to be Solved by the Invention

A liquid heating medium (e.g., hot water) at a temperature close to the target temperature could be obtained by using a method of supplying electrical power to an electrical-heating heater, such as in Patent Document 1, in a fluid heating unit such as in Patent Document 2. However, in order to obtain a heating medium at a temperature close to the target temperature by means of the technology in Patent Document 1 and Patent Document 2, it is assumed that the heating medium flowing through the heating device will be at a predetermined flow rate. When the heating medium is being supplied at a predetermined flow rate, the heating medium will then be at a predetermined temperature at the point when it flows out from the heating device if predetermined electrical power is supplied. However, if the heating medium is not supplied at the predetermined flow rate for some reason, such as a fault in a pump, it is then not possible to obtain a heating medium at the predetermined temperature unless the amount of electrical power supplied is appropriately reduced.

Furthermore, the heating medium may no longer be supplied to a tank of the heating device for some reason such as a fault in the pump. Here, if there has been an error at the production stage so that a filling amount of the heating medium does not satisfy a defined amount, or there is a problem for some reason such as a pipe leak so that the volume of the heating medium is less than a defined amount, then the liquid surface inside the tank of the heating device drops and a state of dry-heating occurs, with a heating element being exposed from the liquid surface. When the heating element is in a dry-heating state, the surface temperature of the heating element reaches a higher temperature than a normal operating temperature, which leads to unintended risks such as components of the heating medium being deposited and the heating element being damaged.

Heating devices thus need to detect both a low flow rate state and a dry-heating state. The heating device of Patent Document 3 is capable of detecting a dry-heating state by means of the electrical resistance value between the outer surfaces of different heaters, but is not capable of detecting a low flow rate state. A separate function needs to be added in order to detect a low flow rate, which increases the number of components. Furthermore, a plurality of heating elements need to be arrayed in the heating device of Patent Document 3, which causes the problem of increasing the size of the heating device. It is desirable for the heating device to occupy a small amount of space, given that a large number of devices are disposed in a vehicle front compartment (the space formed at the front of the vehicle compartment, separate from the space occupied by the passengers) where the heating device is disposed.

The objective of the present disclosure lies in providing a heating control device and a control program, a fluid heating unit, a heating cycle device, and a vehicle air conditioning device comprising same, which integrate a function for detecting a dry-heating state of a heating element and a function for detecting a low flow rate state of a heating medium, and can thereby suppress an increase in the number of components.

### Means for Solving the Problems

A heating control device according to the present invention is mounted in a fluid heating unit comprising an inflow port, a flow path and an outflow port for a coolant, and also comprising: a tank in which the inflow port and the outflow port are connected to a circulation flow path; a heater which is disposed inside the flow path and generates heat by means of energization in order to heat the coolant; a temperature detection device having a temperature-sensitive portion in a downstream portion of the flow path; and a transistor for supplying electrical power to the heater, the heating control device being characterized in that it stores a value of a threshold rate set on the basis of a temperature increase rate of the coolant in the downstream portion of the flow path when a volume of the coolant is a defined amount and a flow rate of the coolant is 0 L/min, calculates a temperature increase rate on the basis of a temperature detected by the temperature detection device, and turns the transistor off to stop application of electrical power to the heater when a value of the temperature increase rate is equal to or greater than the value of the threshold rate.

Preferably, the heating control device according to the present invention calculates, on the basis of the temperature detected by the temperature detection device, a temperature increase value at a predetermined time after stoppage of the application of the electrical power to the heater, when the temperature increase value is equal to or greater than a predetermined increase value, determines that the volume of the coolant inside the tank has decreased so that the heater is in a dry-heating state, and, when the temperature increase value is less than the predetermined increase value, determines that there is a zero flow rate state but the volume of the coolant is within the range of the defined amount. The cause of a fault can be appropriately ascertained. As a result, it is possible to appropriately determine subsequent measures to be taken.

Preferably, the heating control device according to the present invention stores a liquid volume/temperature rise map indicating a relationship between the temperature increase value and the volume of the coolant inside the tank, and when it has been determined that the heater is in a dry-heating state, derives, on the basis of the liquid volume/temperature rise map, an estimated volume of the coolant inside the tank corresponding to the calculated temperature increase value. The extent of a fault can be appropriately ascertained. As a result, it is possible to appropriately determine subsequent measures to be taken.

Preferably, the heating control device according to the present invention stores a flow rate/temperature rise map indicating a relationship between the flow rate of the coolant and the temperature increase rate of the coolant in the downstream portion of the flow path when a heating amount of the heater is a predetermined heating amount, and sets the value of the threshold rate on the basis of the flow rate/temperature rise map. A map for ascertaining the flow rate can therefore be put to another use.

In the heating control device according to the present invention, the temperature-sensitive portion is preferably disposed above the heater. A drop in the liquid surface inside the tank can be detected more rapidly.

A fluid heating unit according to the present invention comprises an inflow port, a flow path and an outflow port for a coolant, and also comprises: a tank in which the inflow port and the outflow port are connected to a circulation flow path; a heater which is disposed inside the flow path and generates heat by means of energization in order to heat the coolant; a temperature detection device having a temperature-sensitive portion in a downstream portion of the flow path; a transistor for supplying electrical power to the heater; and a heating control device according to the present invention, the fluid heating unit being characterized in that the heating control device controls the supply of electrical power to the heater by means of the transistor.

A heating cycle device according to the present invention comprises: a circulation flow path; a coolant filling the circulation flow path; a pump for circulating the coolant in the circulation flow path; a fluid heating unit according to the present invention for regulating the temperature of the coolant; and a radiator for releasing heat of the coolant, the heating cycle device being characterized in that the coolant is heated by energization of the heater by means of the transistor in the fluid heating unit.

A vehicle air conditioning device according to the present invention is mounted in a vehicle and comprises the heating cycle device according to the present invention, the vehicle air conditioning device being characterized in that the vehicle is capable of running on an electric motor, the vehicle air conditioning device comprises a temperature regulating unit for regulating a temperature of air supplied into a vehicle compartment, and the radiator is a hot water-type heat exchanger disposed inside the temperature regulating unit.

A control program according to the present invention is characterized by causing the heating control device according to the present invention to implement processing to control the supply of electrical power to the heater by means of the transistor, based on the temperature increase rate.

### Advantage of the Invention

The present disclosure makes it possible to provide a heating control device and a control program, a fluid heating unit, a heating cycle device, and a vehicle air conditioning device comprising same, which integrate a function for detecting a dry-heating state of a heating element and a function for detecting a low flow rate state of a heating medium, and can thereby suppress an increase in the number of components.

### Brief Description of the Drawings

[Fig. 1] is a block diagram showing an example of the fluid heating unit, heating cycle device, and vehicle air conditioning device comprising same, according to an embodiment.
[Fig. 2] is a schematic view in cross section showing an example of a tank of the fluid heating unit.
[Fig. 3] is a diagram to illustrate a temperature increase rate of a coolant.
[Fig. 4] shows a flow rate/temperature rise map in a graphical form, where (a) shows a first example and (b) shows a second example.
[Fig. 5] is a diagram showing changes over time of a detection temperature in a dry-heating state.

### Embodiment of the Invention

An embodiment of the present invention will be described below with reference to the appended drawings. The embodiment described below is an example of the present invention, and the present invention is not limited to the embodiment below. It should be noted that components having the same reference symbols in the specification and drawings denote the same components. A number of variant forms are also possible as long as the effects of the present invention are demonstrated. In the description, up/down, upper/lower, etc. mean up/down, upper/lower, etc. based on a vehicle in which the vehicle fluid heating unit is mounted.

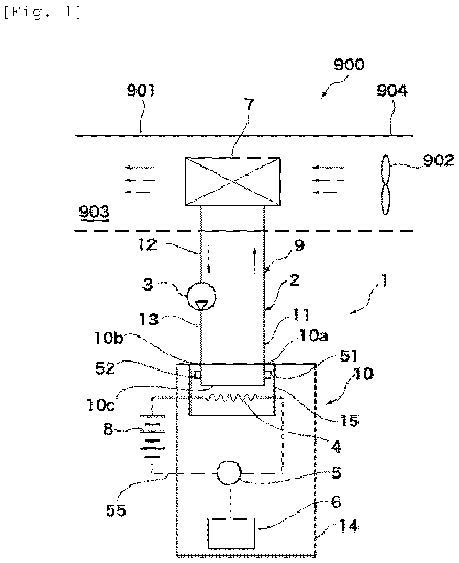

Fig. 1 is a block diagram showing an example of the fluid heating unit, heating cycle device, and vehicle air conditioning device comprising same, according to the embodiment. A heating control device 6 according to this embodiment is mounted in a fluid heating unit 10 comprising an inflow port 10b, a flow path 10c and an outflow port 10a for a coolant, and also comprising: a tank 15 in which the inflow port 10b and the outflow port 10a are connected to a circulation flow path 2; a heater 4 which is disposed inside the flow path 10c and generates heat by means of energization in order to heat the coolant; a temperature detection device 51 having a temperature-sensitive portion 51a in a downstream portion of the flow path 10c; and a transistor 5 for supplying electrical power to the heater 4, and the heating control device 6 stores a value of a threshold rate Vt set on the basis of a temperature increase rate V₀ of the coolant in the downstream portion of the flow path 10c when a volume of the coolant is a defined amount and a flow rate of the coolant is 0 L/min, calculates a temperature increase rate V on the basis of a temperature detected by the temperature detection device 51, and turns the transistor 5 off to stop application of electrical power to the heater 4 when a value of the temperature increase rate V is equal to or greater than the value of the threshold rate Vt.

The fluid heating unit 10 comprises the inflow port 10b, the flow path 10c and the outflow port 10a for the coolant, and also comprises: the tank 15 in which the inflow port 10b and the outflow port 10a are connected to the circulation flow path 2; the heater 4 which is disposed inside the flow path 10c and generates heat by means of energization in order to heat the coolant; the temperature detection device 51 having the temperature-sensitive portion 51a in the downstream portion of the flow path 10c; the transistor 5 for supplying electrical power to the heater 4; and the heating control device 6 according to this embodiment, the heating control device 6 controlling the supply of electrical power to the heater 4 by means of the transistor 5.

In the fluid heating unit 10, the transistor 5 supplies electrical power to the heater 4 so that the heater 4 generates heat, and the coolant supplied to a radiator 7 in the vehicle air conditioning device is thereby heated. Here, the heating control device 6 controls switching operations of the transistor 5, and an on/off duty ratio of the transistor 5 is varied to adjust an amount of heating afforded by the heater 4, whereby the temperature of the coolant is regulated.

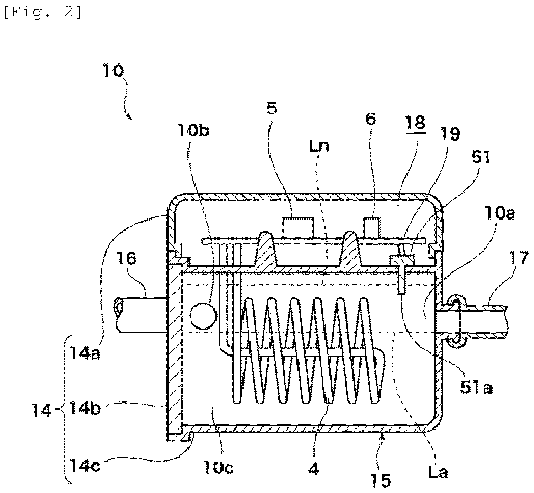

Fig. 2 is a schematic view in cross section showing an example of the tank of the fluid heating unit. The tank 15 constitutes a portion of a housing 14 that forms a shell of the fluid heating unit 10. The housing 14 comprises a metal such as aluminum alloy, or a heat-resistant resin such as 6,6-nylon, for example, and, as shown in fig. 2, it may comprise a cover 14a, a lid 14b, and a housing main body 14c. The housing main body 14c is a cylindrical member having an opening at one end. The lid 14b is a plate-shaped member closing off the opening in the housing main body 14c. In this form, the tank 15 is formed as a result of the opening in the housing main body 14c being closed off by the lid 14b. The cover 14a is a capping member covering an upper wall surface of the housing main body 14c. A space enclosed by the cover 14a and the upper wall surface of the housing main body 14c forms an accommodating chamber 18. Electrical components such as the transistor 5, the heating control device 6, and a board 19, etc. are accommodated in the accommodating chamber.

As shown in fig. 2, the tank 15 comprises the coolant flow path 10c as an internal space, and allows the coolant that has flowed in from the inflow port 10b to pass through to the outflow port 10a. The heater 4 is accommodated inside the tank 15. An inflow port connecting pipe 16 is connected to the inflow port 10b. The inflow port connecting pipe 16 is connected to a pipe 13 (shown in fig. 1) constituting the circulation flow path 2. Alternatively, the pipe 13 may also serve as the inflow port connecting pipe 16. An outflow port connecting pipe 17 is connected to the outflow port 10a. The outflow port connecting pipe 17 is connected to a pipe 11 (shown in fig. 1) constituting the circulation flow path 2. Alternatively, the pipe 11 may also serve as the outflow port connecting pipe 17.

The heater 4 is an electrical heating element which generates heat by being energized, and there is no particular limitation as to what kind of heater it is, and a sheath heater in which a nichrome wire is enclosed by a metal pipe is used, for example.

The temperature detection device 51 is a temperature sensor, for example. The temperature-sensitive portion 51a of the temperature detection device 51 is provided in the downstream portion of the flow path 10c, as shown in fig. 2. The downstream portion of the flow path 10c is in the vicinity of the outflow port 10a, for example. Even if there are variations in the temperature of the coolant, depending on the location in the tank 15, the coolant collects at the outflow port 10a as it flows out from the tank 15 and is therefore mixed, so the temperature of the coolant can be detected without variations. In addition, the temperature-sensitive portion 51a of the temperature detection device 51 is more preferably provided in the flow path 10c immediately before the outflow port 10a, as shown in fig. 2. By providing the temperature-sensitive portion 51a of the temperature detection device 51 upstream of the outflow port 10a, it is possible to detect the temperature of the coolant before any unintended release of heat therefrom, and thermal energy transferred from the heater 4 to the coolant can be detected very accurately. As shown in fig. 2, the temperature-sensitive portion 51a is preferably disposed above the heater 4. This allows a drop in the liquid surface inside the tank 15 to be detected more rapidly.

The transistor 5 is preferably an insulated gate bipolar transistor (IGBT), for example. As shown in fig. 1, the transistor 5 is electrically connected to a battery 8. Furthermore, the transistor 5 is electrically connected to the heating control device 6 and performs switching operations in accordance with command signals from the heating control device 6. The transistor 5 controls the supply of electrical power to the heater 4 by means of switching operations. By varying the on/off duty ratio of the transistor 5, it is possible to regulate the amount of heating afforded by the heater 4 and to regulate the amount of heat imparted to the coolant. As shown in fig. 1, the fluid heating unit 10 comprises at least the heater 4, the transistor 5, the heating control device 6, and electrical wiring 55 which connects the above components and constitutes an electrical circuit together with the battery 8.

As shown in fig. 1, a heating cycle device 1 according to this embodiment comprises: the circulation flow path 2; the coolant filling the circulation flow path 2; a pump 3 for circulating the coolant in the circulation flow path 2; the fluid heating unit 10 according to this embodiment for regulating the temperature of the coolant; and the radiator 7 for releasing heat of the coolant, the coolant being heated by energization of the heater 4 by means of the transistor 5 in the fluid heating unit 10.

The heating cycle device 1 is a device for generating heat by performing heat exchange between the coolant, which is temperature-regulated in the fluid heating unit 10, and air passing through the radiator 7, producing warm air for heating in the vehicle air conditioning device.

The circulation flow path 2 includes: the pipe 11 connecting the outflow port 10a of the tank 15 accommodating the heater 4 and a coolant inflow port of the radiator 7; a pipe 12 connecting a coolant outflow port of the radiator 7 and the pump 3; and the pipe 13 connecting the pump 3 and the inflow port 10b of the tank 15.

The coolant (not depicted) is in a liquid state at normal temperature, and is a heating medium obtained by dissolving ethylene glycol or glycerol in water, for example.

The radiator 7 is a hot water-type heat exchanger. The radiator 7 internally comprises a coolant flow path.

As shown in fig. 1, the tank 15, the circulation flow path 2, a flow path inside the radiator 7, and a flow path inside the pump 3 constitute a coolant circuit 9. In the coolant circuit 9, the coolant is fed by means of the pump 3, is introduced into the tank 15 from the inflow port 10b through the pipe 13, and is heated by means of the heater 4 installed inside the tank 15. The heated coolant is then drawn from the outflow port 10a of the tank 15 and fed through the pipe 11 to the radiator 7, where heat is released from the coolant in order to warm the air for air conditioning. The coolant that has passed through the radiator 7 is drawn into the pump 3 through the pipe 12 and circulated. The coolant circuit 9 is filled with a defined amount of coolant in a defined state. Here, a liquid surface Ln (the liquid surface in a defined state may also be referred to below as the defined liquid surface Ln) of the coolant inside the tank 15 is located above the heater 4, as shown in fig. 2.

During operation of the fluid heating unit 10, a flow rate of the coolant circulating through the coolant circuit 9 is set at a predetermined flow rate (set flow rate) such as 10 L/min, for example. Here, the flow rate of the coolant is the volume of coolant flowing through the circulation flow path 2 per unit time in the heating cycle device 1. However, there are sometimes problems of coolant at the set flow rate not being supplied for some reason, such as a fault in the pump 3 or a pipe leak. If the coolant flow rate is lower than the set flow rate during operation of the fluid heating unit 10, there is a risk of localized abnormal heat generation, etc. caused by the coolant boiling, which adversely affects reliability of the fluid heating unit 10.

Furthermore, there is sometimes an error at the production stage so that a filling amount of the coolant does not satisfy a defined amount, or there is a problem for some reason such as a pipe leak so that the volume of the coolant is less than a defined amount. Even in this case, provided that the coolant is circulated through the coolant circuit 9 by driving of the pump 3, at least the inside of the tank 15 will be filled with the coolant. The liquid surface of the coolant inside the tank 15 will therefore be positioned above the heater 4, in the same way as the defined liquid surface Ln shown in fig. 2. However, if the coolant is no longer being circulated through the coolant circuit 9 for some reason such as a fault in the pump 3, then a liquid surface La (see fig. 2) of the coolant inside the tank 15 may be lower than the defined liquid surface Ln, and may be positioned below the upper end of the heater 4 (the liquid surface in a dropped liquid surface state may also be referred to below as the dropped liquid surface La). That is to say, a part or all of the heater 4 is in a dry-heating state, exposed from the dropped liquid surface La. When the heater 4 is in a dry-heating state, a surface temperature of the heater 4 reaches a higher temperature than the normal operating temperature, which leads to unintended risks such as components of the coolant being deposited and the heater 4 being damaged.

As indicated above, the fluid heating unit 10 needs to detect an abnormal coolant flow rate and a dry-heating state. Conventionally, separate detection functions were used for these two fault modes. However, this has the problem of increasing the number of components. The heating control device 6 according to this embodiment therefore detects both the coolant flow rate and dry-heating state by using the temperature in the downstream portion of the flow path 10c in the fluid heating unit 10. This makes it possible to suppress an increase in the number of components by using a common detection function for these two fault modes.

The method by which the heating control device 6 detects both the coolant flow rate and dry-heating state by using the temperature in the downstream portion of the flow path 10c in the fluid heating unit 10 will be described next.

The heating control device 6 first of all calculates a temperature increase rate V on the basis of the temperature detected by the temperature detection device 51. The temperature increase rate V is calculated as follows, for example. If X is the temperature detected by the temperature detection device 51 at a given time point t after the start of energization of the heater 4, and X' is the temperature detected by the temperature detection device 51 at a time point (t-Δt) a predetermined time Δt before the time point t, then the temperature increase rate V at the time point t may be determined by { (X-X')/Δt}. There is no particular limitation as to the predetermined time Δt, and it is 1-5 seconds, for example. The heating control unit 6 acquires the temperature detected by the temperature detection device 51 every 10 ms, and calculates the temperature increase rate V every second.

When the value of the calculated temperature increase rate V is equal to or greater than the value of a threshold rate Vt, the heating control device 6 then sends a command signal to the transistor 5 to turn off switching operations. The heating control device 6 calculates the temperature increase rate V at predetermined time intervals (e.g., 1 second intervals), and if it is determined that the calculated temperature increase rate V has been equal to or greater than the threshold rate Vt for a predetermined number of times (e.g., eight times) in succession, then the transistor 5 is preferably turned off. The threshold rate Vt is preferably a value which is the same as a temperature increase rate V₀ (this may also be referred to below as the zero flow rate temperature increase rate V₀) of the coolant in the downstream portion of the flow path 10c when the volume of the coolant is a defined amount and the flow rate of the coolant is 0 L/min, or a value which is smaller than the zero flow rate temperature increase rate V₀. In other words, the threshold rate Vt is preferably equal to or less than the zero flow rate temperature increase rate V₀. There is no particular limitation as to the lower limit value of the threshold rate Vt, but it is preferably the zero flow rate temperature increase rate V₀-0.5°C/min or greater, for example. The temperature increase rate V being equal to or greater than the threshold Vt indirectly indicates that coolant is not being supplied into the tank 15 for some reason, in other words, that there is a zero flow rate state in which the coolant flow rate is 0 L/min. A zero flow rate state includes a case in which the volume of coolant inside the tank 15 has decreased so that the heater 4 is in a dry-heating state, and a case in which there is a zero flow rate but the volume of coolant is within the range of the defined amount. Whatever the case, there is a risk of secondary damage occurring if the heater 4 continues to heat the coolant, so the application of electrical power to the heater 4 is stopped.

The heating control device 6 stores preset values for the threshold rate Vt, or else may store a flow rate/temperature rise map indicating a relationship between the flow rate of the coolant and the temperature increase rate of the coolant in the downstream portion of the flow path 10c when the heating amount of the heater 4 is a predetermined heating amount E₁₀₀, and may set the values of the threshold rate Vt on the basis of the flow rate/temperature rise map, and store the set values. The latter case enables a map for ascertaining the flow rate to be put to another use. There is no particular limitation as to the predetermined heating amount E₁₀₀, but it is 7 kW/h, for example.

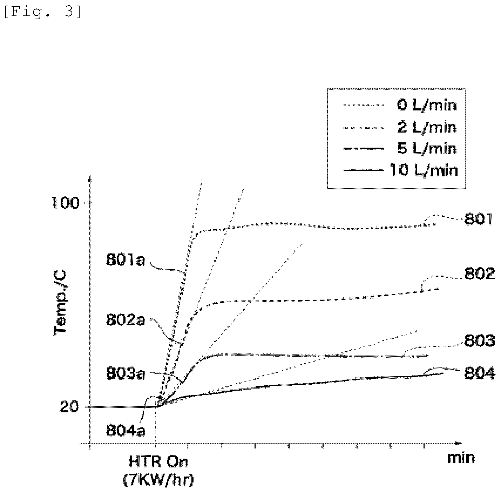

The flow rate/temperature rise map will be described next with reference to fig. 3 in regard to the temperature increase rate of the coolant. Fig. 3 is a diagram to illustrate the temperature increase rate of the coolant. Fig. 3 shows a case in which the coolant volume is a defined amount and the heating amount of the heater 4 is 7 kW/h in graphs 801, 802, 803, 804 expressing a relationship between elapsed time and coolant temperature in the downstream portion of the flow path 10c, where the flow rate is 0 L/min (0 L/h) in the graph 801, the flow rate is 2 L/min (120 L/h) in the graph 802, the flow rate is 5 L/min (300 L/h) in the graph 803, and the flow rate is 10 L/min (600 L/h) in the graph 804. The horizontal axis is elapsed time with the units in minutes. The vertical axis is the coolant temperature in the downstream portion of the flow path 10c with the units in °C. The coolant temperature in the downstream portion of the flow path 10c is the temperature detected by the temperature detection device 51, for example. The graphs 801, 802, 803, 804 have rising parts 801a, 802a, 803a, 804a at the start of heating of the heater 4. The start of heating of the heater 4 is preferably within 60 seconds of the start of energization of the heater 4, and is more preferably within 20-30 seconds of the start of energization of the heater 4. The temperature increase rate of the coolant is the slope of tangents to the rising parts 801a, 802a, 803a, 804a. Among these, the slope of the tangent to the rising part 801a is the zero flow rate temperature increase rate V₀. The units of the temperature increase rate of the coolant are °C/min. As shown in fig. 3, if the flow rate of the coolant varies when the heating amount of the heater 4 is a predetermined amount, then the temperature increase rate of the coolant varies. More specifically, a lower coolant flow rate tends to give a faster temperature increase rate of the coolant. This tendency is functionalized in the flow rate/temperature rise map.

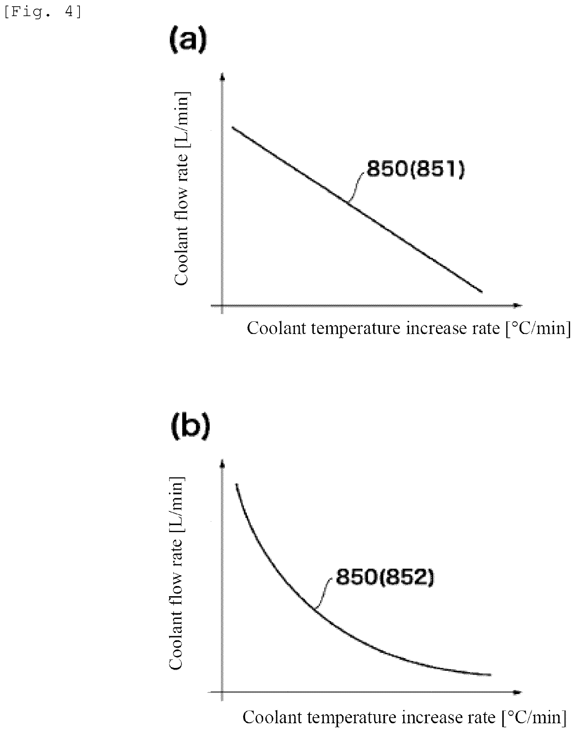

Fig. 4 shows the flow rate/temperature rise map in a graphical form, where fig. 4(a) shows a first example and fig. 4(b) shows a second example. The flow rate/temperature rise map is stored in a memory unit (not depicted) of the heating control device 6. A flow rate/temperature rise map 850 (851, 852) is a function indicating the relationship between the flow rate of the coolant and the temperature increase rate of the coolant in the downstream portion of the flow path 10c when the heating amount of the heater 4 is a predetermined amount, and as shown in fig. 4(a) and 4(b), for example, when this relationship is displayed in a graphical form with the horizontal axis showing the temperature increase rate of the coolant in the downstream portion of the flow path 10c and the vertical axis showing the flow rate of the coolant, the flow rate/temperature rise map 850 (851, 852) is expressed in graphs such as a linear function 851 with a negative slope, such as shown in fig. 4(a), or an inversely proportional function 852, such as shown in fig. 4(b), for example. The heating control device 6 according to this embodiment may set the threshold rate Vt by acquiring the zero flow rate temperature increase rate V₀ from the flow rate/temperature rise map 850 (851, 852). Furthermore, although the zero flow rate temperature increase rate V₀ is the temperature increase rate at a zero flow rate in a state in which the coolant circuit 9 is filled with the defined amount of coolant, the threshold rate Vt may equally be set by using, instead of the zero flow rate temperature increase rate V₀, a temperature increase rate V₀' of the coolant detected by the temperature detection device 51 in a state in which the tank 15 is experimentally filled with the full amount of coolant, and the inflow port 10b and the outflow port 10a of the tank 15 are closed off to make the fluid heating unit 10 into a closed system. The temperature increase rate V₀' is broadly the same value as the zero flow rate temperature increase rate V₀.

When the heater 4 is in a dry-heating state during a zero flow rate state, the temperature detected by the temperature detection device 51 is the temperature of the air heated by means of the heater 4. Meanwhile, when the coolant volume is within the range of the defined amount during a zero flow rate state, the temperature detected by the temperature detection device 51 is the temperature of the coolant heated by means of the heater 4. The specific heat of the coolant is higher than the specific heat of air, so when the same amount of heat is applied to the same volume of coolant and air, a phenomenon occurs where the temperature of the air is higher than the temperature of the coolant. The heating control device 6 according to this embodiment utilizes this phenomenon to determine whether, after the transistor 5 has been turned off, the zero flow rate state constitutes a case in which the volume of coolant inside the tank 15 has decreased so that the heater 4 is in a dry-heating state, or a case in which the volume of the coolant is within the range of the defined amount. Specifically, the heating control device 6 according to this embodiment calculates, on the basis of the temperature detected by the temperature detection device 51, a temperature increase value ΔT at a predetermined time after stoppage of the application of the electrical power to the heater 4, and, when the temperature increase value ΔT is equal to or greater than a predetermined increase value Tp, preferably determines that the volume of the coolant inside the tank 15 has decreased so that the heater 4 is in a dry-heating state, and, when the temperature increase value ΔT is less than the predetermined increase value Tp, preferably determines that there is a zero flow rate state but the volume of the coolant is within the range of the defined amount. This makes it possible to appropriately ascertain the cause of a fault which has occurred. As a result, it is possible to appropriately determine subsequent measures to be taken. In the case of a dry-heating state, the subsequent measures to be taken are replenishing the coolant, or replacing or repairing the fluid heating unit 10, for example. Furthermore, when the volume of the coolant is within the range of the defined amount, the pump 3 is replaced or repaired. There is no particular limitation as to the predetermined time after stoppage of the application of the electrical power to the heater 4, but it is 30-120 seconds, for example. The predetermined increase value Tp varies according to conditions such as the capacity of the tank 15 and the components of the coolant, etc., but the value is 5-8°C, for example.

Preferably, the heating control device 6 according to this embodiment stores a liquid volume/temperature rise map indicating a relationship between the temperature increase value ΔT and the volume of the coolant inside the tank 15, and when it has been determined that the heater 4 is in a dry-heating state, the heating control device 6 derives, on the basis of the liquid volume/temperature rise map, an estimated volume of the coolant inside the tank 15 corresponding to the calculated temperature increase value ΔT.

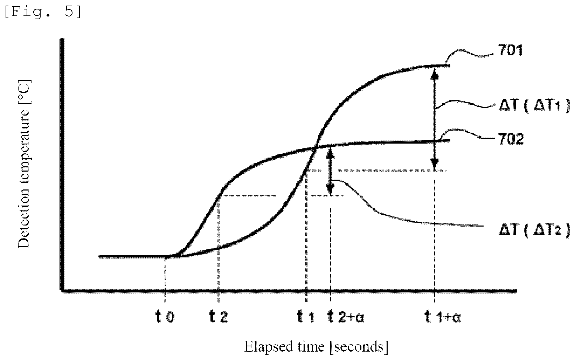

Fig. 5 is a diagram showing changes over time of a detection temperature in a dry-heating state. In fig. 5, the horizontal axis shows elapsed time [seconds], and the vertical axis shows the detection temperature [ºC] obtained by the temperature detection device 51. Graphs 701, 702 both show a case in which the liquid surface inside the tank 15 is the dropped liquid surface La (shown in fig. 2), the graph 701 showing a case in which the liquid volume inside the tank 15 is relatively small, and the graph 702 showing a case in which the liquid volume inside the tank 15 is relatively large. Fig. 5 shows a difference ΔT (ΔT₁, ΔT₂) between detection temperatures at t₁, t₂ when the detection temperature has increased from t₀ at the start of energization of the heater 4, the temperature increase rate V has reached or exceeded the threshold rate Vt and energization of the heater 4 has been stopped, and detection temperatures at t_{1+α}, t_{2+α} when a predetermined time α has elapsed after t₁, t₂. The case in which the liquid volume is relatively small can be otherwise expressed as a case in which the amount of air is relatively large. Conversely, the case in which the liquid volume is relatively large can be otherwise expressed as a case in which the amount of air is relatively small. Since the specific heat of the coolant is higher than the specific heat of air, the temperature increase value ΔT₁ in the graph 701 in which the liquid volume is relatively small (the amount of air is relatively large) is greater than the temperature increase value ΔT₂ in the graph 702 in which the liquid volume is relatively large (the amount of air is relatively small), as shown in fig. 5. The temperature increase value ΔT thus tends to increase as the liquid volume decreases (as the amount of air increases). This tendency is functionalized in the liquid volume/temperature rise map. When the liquid volume/temperature rise map is displayed as a graph with ΔT on the horizontal axis and the volume of coolant inside the tank 15 on the vertical axis, the liquid volume/temperature rise map is expressed in graphs such as a linear function with a negative slope or an inversely proportional function. The extent of a fault can be appropriately ascertained by deriving an estimated volume of the coolant inside the tank 15 on the basis of the liquid volume/temperature rise map. As a result, it is possible to appropriately determine subsequent measures to be taken. When the estimated volume is relatively large, the subsequent measure to be taken is replenishment of the coolant, for example. Furthermore, when the estimated volume is relatively small, the fluid heating unit 10 is replaced or repaired because it is very likely that the heater 4 will be damaged.

As shown in fig. 1, a vehicle air conditioning device 900 according to this embodiment is mounted in a vehicle and comprises the heating cycle device 1 according to this embodiment, the vehicle is capable of running on an electric motor, the vehicle air conditioning device 900 comprises a temperature regulating unit 901 for regulating the temperature of air supplied into a vehicle compartment, and the radiator 7 is a hot water-type heat exchanger disposed inside the temperature regulating unit 901.

The vehicle air conditioning device 900 comprises a blower unit 904 and the temperature regulating unit 901. A blower 902 for blowing, toward an air flow path 903, air taken in from an internal air introduction port and/or an external air introduction port (not depicted) are disposed in the blower unit 904. An internal space of the temperature regulating unit 901 constitutes the air flow path 903, and the hot water-type heat exchanger (radiator) 7 is disposed in the air flow path 903. The vehicle air conditioning device 900 preferably further comprises: a cooling heat exchanger (not depicted), upstream of the hot water-type heat exchanger 7 in the air flow path 903, for dehumidifying/cooling, as required, the air fed from the blower unit 904; and an air mix door (not depicted) which is disposed between the cooling heat exchanger and the hot water-type heat exchanger 7 and adjusts a proportion of air passing through the hot water-type heat exchanger 7 and air bypassing the hot water-type heat exchanger 7. A defrost opening portion (not depicted), a vent opening portion (not depicted), and a foot opening portion (not depicted) are provided in the portion of the temperature regulating unit 901 furthest downstream. These opening portions are respectively connected to blowout ports (not depicted) inside the vehicle compartment, either directly or indirectly via a duct (not depicted).

The vehicle includes, for example: an electric vehicle (EV) which runs solely on an electric motor; a hybrid vehicle (HEV) which runs on multiple power sources, including an electric motor and an internal combustion engine; or a vehicle which has an internal combustion engine only generating electricity, and which runs on an electric motor driven by using electrical power therefrom. In these vehicles, the total amount of coolant in a coolant loop tends to be smaller than in a vehicle with an engine, and if there is a reduction in the volume of coolant because of some kind of problem, it is likely that the heater 4 will be exposed from the coolant so that the surface temperature of the heater 4 reaches an abnormally high temperature, but if the heating cycle device 1 is installed in the vehicle air conditioning device according to this embodiment, then the reduction in the liquid volume can be discovered at an early stage.

A control program according to this embodiment causes the heating control device 6 according to this embodiment to implement processing to control the supply of electrical power to the heater 4 by means of the transistor 5, based on the temperature increase rate V. Implementation of the control program includes the following process, for example. The temperature detected by the temperature detection device 51 is first of all sensed, and the temperature increase rate V is calculated. The temperature increase rate V and the threshold rate Vt are then compared. When the temperature increase rate V is equal to or greater than the threshold rate Vt, control is performed to turn off the transistor 5.

### Key to Symbols

1 Heating cycle device
2 Circulation flow path
3 Pump
4 Heater
5 Transistor
6 Heating control device
7 Radiator
8 Battery
9 Coolant circuit
10 Fluid heating unit
10a Outflow port
10b Inflow port
10c Flow path
11, 12, 13 Pipe
14 Housing
15 Tank
16 Inflow port connecting pipe
17 Outflow port connecting pipe
51 Temperature detection device
51a Temperature-sensitive portion
55 Electrical wiring
801, 802, 803, 804 Graph
801a, 802a, 803a, 804a Rising part
850 (851, 852) Flow rate/temperature rise map
900 Vehicle air conditioning device
901 Temperature regulating unit
902 Blower
903 Air flow path
904 Blower unit
Ln Defined liquid surface
La Dropped liquid surface

## Claims

1. A heating control device (6) mounted in a fluid heating unit (10) comprising an inflow port (10b), a flow path (10c) and an outflow port (10a) for a coolant, and also comprising: a tank (15) in which the inflow port (10b) and the outflow port (10a) are connected to a circulation flow path (2); a heater (4) which is disposed inside the flow path (10c) and generates heat by means of energization in order to heat the coolant; a temperature detection device (51) having a temperature-sensitive portion in a downstream portion of the flow path (10c); and a transistor (5) for supplying electrical power to the heater (4),
**characterized in that**
the heating control device (6) stores a value of a threshold rate (Vt) set on the basis of a temperature increase rate (V₀) of the coolant in the downstream portion of the flow path (10c) when a volume of the coolant is a defined amount and a flow rate of the coolant is 0 L/min, calculates a temperature increase rate (V) on the basis of a temperature detected by the temperature detection device (51), and turns the transistor (5) off to stop application of electrical power to the heater (4) when a value of the temperature increase rate (V) is equal to or greater than the value of the threshold rate (Vt).

2. The heating control device as claimed in claim 1,
**characterized in that** the heating control device (6) calculates, on the basis of the temperature detected by the temperature detection device (51), a temperature increase value (ΔT) at a predetermined time after stoppage of the application of the electrical power to the heater (4),
when the temperature increase value (ΔT) is equal to or greater than a predetermined increase value (Tp), determines that the volume of the coolant inside the tank has decreased so that the heater (4) is in a dry-heating state, and
when the temperature increase value (ΔT) is less than the predetermined increase value (Tp), determines that there is a zero flow rate state but the volume of the coolant is within the range of the defined amount.

3. The heating control device as claimed in claim 2, **characterized in that** the heating control device (6) stores a liquid volume/temperature rise map indicating a relationship between the temperature increase value (ΔT) and the volume of the coolant inside the tank (15), and
when it has been determined that the heater (4) is in a dry-heating state, derives, on the basis of the liquid volume/temperature rise map, an estimated volume of the coolant inside the tank (15) corresponding to the calculated temperature increase value (ΔT).

4. The heating control device as claimed in any one of claims 1 to 3, **characterized in that** the heating control device (6) stores a flow rate/temperature rise map indicating a relationship between the flow rate of the coolant and the temperature increase rate of the coolant in the downstream portion of the flow path (10c) when a heating amount of the heater (4) is a predetermined heating amount (E₁₀₀), and
sets the value of the threshold rate on the basis of the flow rate/temperature rise map.

5. The heating control device as claimed in any one of claims 1 to 4, **characterized in that** the temperature-sensitive portion is disposed above the heater (4).

6. A fluid heating unit comprising an inflow port (10b), a flow path (10c) and an outflow port (10a) for a coolant, and also comprising: a tank (15) in which the inflow port (10b) and the outflow port (10a) are connected to a circulation flow path (2); a heater (4) which is disposed inside the flow path (10c) and generates heat by means of energization in order to heat the coolant; a temperature detection device (51) having a temperature-sensitive portion in a downstream portion of the flow path (10c); a transistor (5) for supplying electrical power to the heater (4); and a heating control device (6) as claimed in any one of claims 1 to 5,
**characterized in that** the heating control device (6) controls the supply of electrical power to the heater (4) by means of the transistor (5).

7. A heating cycle device comprising: a circulation flow path (2); a coolant filling the circulation flow path (2); a pump (3) for circulating the coolant in the circulation flow path (2); a fluid heating unit (10) as claimed in claim 6 for regulating the temperature of the coolant; and a radiator (7) for releasing heat of the coolant,
**characterized in that** the coolant is heated by energization of the heater (4) by means of the transistor (5) in the fluid heating unit (10).

8. A vehicle air conditioning device (900) mounted in a vehicle and comprising the heating cycle device (1) as claimed in claim 7,
**characterized in that** the vehicle is capable of running on an electric motor,
the vehicle air conditioning device (900) comprises a temperature regulating unit (901) for regulating a temperature of air supplied into a vehicle compartment, and
the radiator (7) is a hot water-type heat exchanger disposed inside the temperature regulating unit (901).

9. A control program **characterized by** causing the heating control device (6) as claimed in any one of claims 1 to 5 to implement processing to control the supply of electrical power to the heater (4) by means of the transistor (5), based on the temperature increase rate (V).
